# EUROPEAN PATENT APPLICATION

(11) **EP 1 901 304 A1**
(43) Date of publication of application: **19.03.2008**
(21) Application number: 07111103.3
(22) Date of filing: 27.06.2007
(51) Int. Cl.: G11B 27/32

(54) **Method of recording video and video recording apparatus thereof, method and apparatus for video playback**

(30) Priority: 15.09.2006 KR 20060089812
(71) Applicant: SAMSUNG ELECTRONICS CO., LTD., Suwon-si Gyeonggi-do 442-742 (KR)
(72) Inventor: Oh, Sang-seok, Gyeonggi-do (KR)
(74) Representative: Perkins, Dawn Elizabeth

(57) **Abstract**

A method of recording a video by parsing a video stream in units of Group of Pictures (GOP), and a video apparatus incorporating the same are provided. The video recording method includes generating a predetermined number of Group of Pictures (GOP) into a single file, and storing the generated file, and storing the name of the file. Accordingly, use of storage space due to index file is avoided, and failure of high-speed playback due to a damaged index file is prevented.

## Description

Methods and apparatuses consistent with the present invention relate to recording a video. More particularly, methods and apparatuses consistent with the present invention relate to recording a video using parsing of video stream in units of Group of Pictures (GOP), and playing back the video stream written in units of GOP.

A video apparatus operates to record externally-received video stream and play back the recorded video stream.

A video stream consists of a plurality of Group of Pictures (GOP). In other words, a video stream consists of a plurality of pictures.

To record the video stream, a video apparatus generates the video stream into a single video file, and writes the generated video file. Additionally, the video apparatus separately generates and writes an index file which indicates the places where the pictures of the video stream are positioned.

An index file is used as a reference when the recorded video stream is played back at high speed. More specifically, to conduct a high-speed playback, the positions of I-pictures are searched with reference to the index file and only the 1-pictures are played back based on the searched information.

However, because the index file is separately generated and written, using a storage space of the video apparatus, a storage space for the video stream decreases.

Additionally, the high-speed playback will not be conducted if the index file is damaged.

Furthermore, because video stream is written in a single video file, damage to a main part of video file will result in failure of entire video playback.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Aspects of the present invention provide a method of recording video which parses a video stream in units of Group of Pictures (GOP) and is capable of preventing use of storage space due to index file, failure of high-speed playback due to damage to the index file, or failure of playback of entire video file due to damage to the main part of the video file, and a video apparatus incorporating the method.

Other aspects of the present invention provide a method of playing back a video which plays back the video stream which is parsed and written, and a video apparatus incorporating the method.

In one exemplary embodiment of the present invention, a method of recording a video is provided, comprising: generating a predetermined number of Group of Pictures (GOP) into a single file, and storing the generated single file; and storing the name of the single file.

In one exemplary embodiment, the predetermined number of GOP comprises one GOP.

Parsing an incoming video stream in units of GOP may be further provided, and the generating and storing of the file generates each of the parsed GOP into a single file and stores the generated files.

The video stream may be in a compression format. The compression format comprises a Moving Picture Experts Group (MPEG) format.

The name of the single file comprises an element which indicates a temporal relation of the GOP contained in the single file with the other GOP of the same video stream.

The name of the single file indicates the order of generating the file.

In another exemplary embodiment of the present invention, an apparatus for recording a video is provided, comprising: a storage unit which stores a file; and a control unit which generates a predetermined number of Group of Pictures (GOP) into a single file and stores the generated file in the storage unit, and stores the name of the file in the storage unit.

In one exemplary embodiment, the predetermined number of GOP comprises one GOP.

A parsing unit may be further provided, which parses an incoming video stream in units of GOP, and the control unit generates each of the parsed GOP into a single file and stores the generated files in the storage unit.

The video stream may be in a compression format. The compression format comprises a Moving Picture Experts Group (MPEG) format.

The control unit may parse an incoming video stream in units of GOP, generate each of the parsed GOP into a single file, and stores the generated files in the storage unit.

The name of the file comprises an element which indicates a temporal relation of the GOP contained in the file with the other GOP of the same video stream.

The name of the file indicates the order of generating the file.

In another exemplary embodiment of the present invention, a method of playing back a video is provided, which comprises: reading a plurality of files, each containing a predetermined number of Group of Pictures (GOP), one by one, by referring to the names of the files; and decoding the read files.

In one exemplary embodiment, the predetermined number of GOP comprises one GOP.

The names of the files each comprises an element which indicates a temporal relation of the GOP contained in the file with the other GOP of the same video stream, and the reading the plurality of files reads the files in the temporal order, by referring to the names of the files.

The names of the files indicate the order of generating the files, and the reading the plurality of files reads the files in the generation order, by referring to the names of the files.

The reading the plurality of files reads I-pictures, among with the pictures constituting the GOP, one by one, by referring to the names of the files, and the decoding the read files decodes the read I-pictures.

In yet another exemplary embodiment of the present invention, an apparatus for playing back a video is provided, which comprises a control unit which reads files, each containing a predetermined number of Group of Pictures (GOP), one by one, by referring to the names of the files; and a decoding unit which decodes the files read by the control unit.

In one exemplary embodiment, the predetermined number of GOP comprises one GOP.

The names of the files each comprises an element which indicates a temporal relation of the GOP contained in the file with the other GOP of the same video stream, and the control unit reads the files in the temporal order, by referring to the names of the files.

The names of the files indicate the order of generating the files, and the control unit reads the files in the generation order, by referring to the names of the files.

The control unit reads I-pictures, among the pictures constituting the GOP, one by one, by referring to the names of the files, and the decoding unit decodes the read I-pictures.

The above aspects and other features of the present invention will become more apparent by describing in detail exemplary embodiments thereof with reference to the attached drawings, in which:
Figure 1 is a block diagram of a video apparatus parsing a video stream and writing the video stream in units of GOP, and playing back a video stream which is parsed and written in units of GOP, according to an exemplary embodiment of the present invention;
Figure 2 is a flowchart illustrating a method of recording a video, in which a video stream is parsed and written in units of GOP according to another exemplary embodiment of the present invention;
Figure 3 is provided to explain the video recording method of Figure 2;
Figure 4 is a flowchart illustrating a method of playing back video stream which is parsed and written in units of GOP, according to another exemplary embodiment of the present invention;
Figures 5 and 6 are provided to explain the video recording method of Figure 3;
Figure 7 is a block diagram of an apparatus for recording a video according to an exemplary embodiment of the present invention;
Figure 8 is a flowchart provided to explain a video recording method according to another exemplary embodiment of the present invention;
Figure 9 is a block diagram of an apparatus for playing back a video according to an exemplary embodiment of the present invention; and
Figure 10 is a flowchart illustrating a method for playing back a video according to an exemplary embodiment of the present invention.

Hereinafter, aspects of the present invention will be described in detail with reference to the drawings.

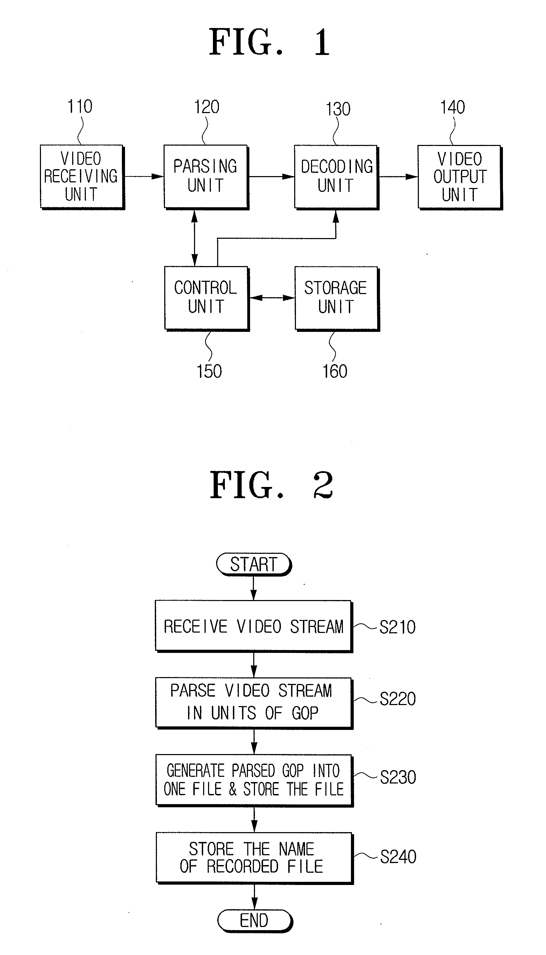

Figure 1 is a block diagram of a video apparatus according to an exemplary embodiment of the present invention. The video apparatus carries out a series of operations to receive A/V stream consisting of video stream, audio stream and other data, and process, record, or play back the received stream. In the following description, an aspect of the exemplary embodiment of the present invention will be explained with respect to the video apparatus which receives, processes, records and plays back the video stream.

The video apparatus of Figure 1 may parse and write an incoming video stream in units of Group of Pictures (GOP). Additionally, the video apparatus of Figure 1 may play back the video stream which is parsed and written in units of GOP.

With reference to Figure 1, the video apparatus according to an exemplary embodiment of the present invention may include a video receiving unit 110, a parsing unit 120, a decoding unit 130, a video output unit 140, a control unit 150 and a storage unit 160.

The video receiving unit 110 receives a video stream and carries out signal processing such as amplification, noise filtering and demodulation. The video receiving unit 110 may receive video stream from a broadcast station, or connected external device, by wired, or wireless communication. The video stream received at the video receiving unit 110 may generally be compressed in the format such as MPEG, H.264.

The parsing unit 120 parses the video stream received at the video receiving unit 110 in units of GOP and outputs the GOP.

The decoding unit 130 may decode the video stream output from the parsing unit 120 and sends the decoded stream to the video output unit 140.

The video output unit 140 may display the video stream decoded at the decoding unit 130 on a display element such as a Liquid Crystal Display (LCD).

The control unit 150 may control the overall operation of the video apparatus. More specifically, the control unit 150 may control such that i) each of the GOP parsed and output from the parsing unit 120 is generated into a single file and the generated file is written in the storage unit 160; and ii) 'files of parsed and written GOP' of the storage unit 160 is played back.

An aspect of generating the GOP of the video stream each into a single file and writing the files according to an exemplary embodiment of the present invention, will be explained in greater detail below with reference to Figure 2. Figure 2 is a flowchart illustrating a video recording method which parses and writes a video stream in units of GOP according to an exemplary embodiment of the present invention.

With reference to Figure 2, the video receiving unit 110 first receives a video stream and performs necessary signal processing, at operation S210. The parsing unit 120 may parse the video stream output from the video receiving unit 110 in units of GOP and output the parsed stream, at operation S220.

Accordingly, the control unit 150 generates each of the GOP parsed and output from the parsing unit 120 into a single file, and writes the files into the storage unit 160, at operation S230. In other words, the control unit 150 causes one GOP to be contained in one file and written in the storage unit 160. As a result, the storage unit 160 holds the same number of the files as the number of GOP of the video stream.

The control unit 150 records the name of the written files in the storage unit 160, at operation S240. The names of the files are stored to a pre-designated area of the storage unit 160, and a metadata area of the storage unit 160 may be used to store the names of the files.

The names of the files may reflect the order of file generation. That is, the names of the files may be given in a manner such that the names suggest the temporal order of the GOP of the file and other GOP of the same video stream.

For example, a file containing the fifth GOP of the video stream may be named 'F5' such that it suggests that the fifth GOP of the video stream is contained in file F5. By doing so, the files stored in the storage unit 160 may be played back in order, simply based on the file names.

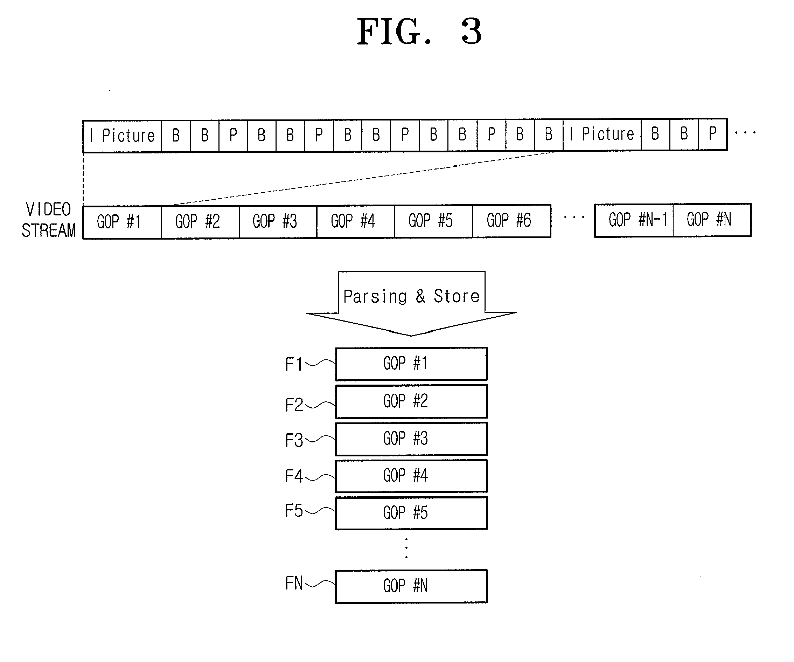

The video recording method of Figure 2 will be explained in further detail below, with reference to Figure 3.

As illustrated in the upper part of Figure 3, a vide stream includes N number of GOP, and each of the GOP includes one I-picture, and a plurality of P-pictures and B-pictures.

As illustrated in the lower part of Figure 3, the video stream is parsed and written in units of GOP. The files, each containing one GOP, are names F1, F2, F3, ..., FN to indicate the temporal order of the GOP in the video stream.

In the duration of operations S230 and S240, the decoding unit 130 decodes a video stream output from the parsing unit 120, and the video output unit 140 displays a video stream decoded at the decoding unit 130 such that a user can view the video stream.

An example of generating each of GOP of a video stream into a single file and writing the files was explained above. In the following description, the process of playing back the files which are parsed and written in units of GOP, will be explained.

A video apparatus may have a normal playback mode and a high-speed playback mode according to an exemplary embodiment of the present invention. The normal playback mode plays back all the pictures of the GOP of the video stream, while the high-speed playback mode plays back only the I-pictures of the GOP of the video stream to achieve high-speed playback.

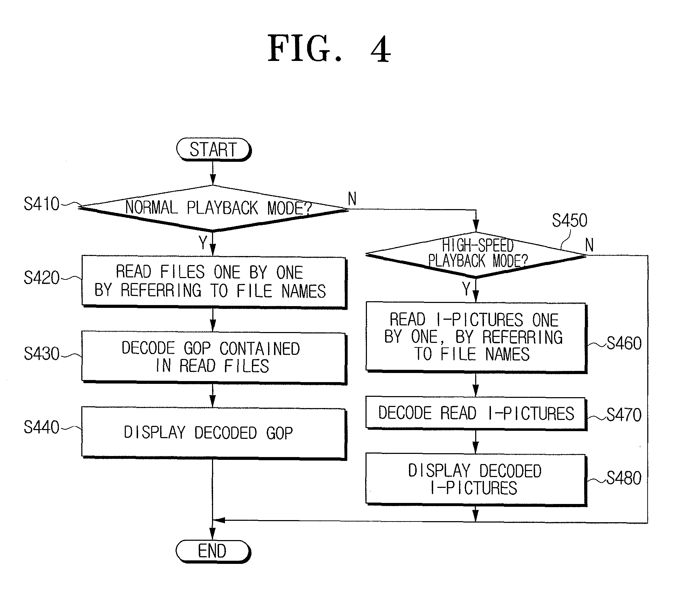

The process of playing back video stream in each mode will be explained in greater detail below, with reference to Figure 4. Figure 4 is a flowchart illustrating a method of playing back video stream which is parsed and written in units of GOP, according to another exemplary embodiment of the present invention.

First, the control unit 150 determines that the video apparatus is in normal playback mode at operation S410, or in high-speed playback mode at operation S450.

If the video apparatus is determined to be in the normal playback mode, the control unit 150 reads the files in a predetermined order, with reference to the file names written in the storage unit 160, at operation S420. The control unit 150 may determine the temporal order of the GOP of the video stream in the files with reference to the file names.

More specifically, the names of the files each contain element that indicates temporal relations of the GOP in the files with the GOP in the other files such that the temporal order of generating the files can be determined.

Accordingly, the control unit 150 may determine the order of generating the files with reference to the file names, and the generation order of the files corresponds to the temporal order of the GOP of the video stream which are contained in the files. Accordingly, at operation S420, the control unit 150 may read the files in the generation order which is referred from the file names.

After the operation S420, the decoding unit 130 may decode the GOP of the read files in order, at operation S430. The decoding unit 130 may receive the files read by the control unit 150 i) through the parsing unit 120, or ii) directly from the control unit 150. [73] Accordingly, the video output unit 130 may display the decoded and output GOP for the view of the user, at operation S440.

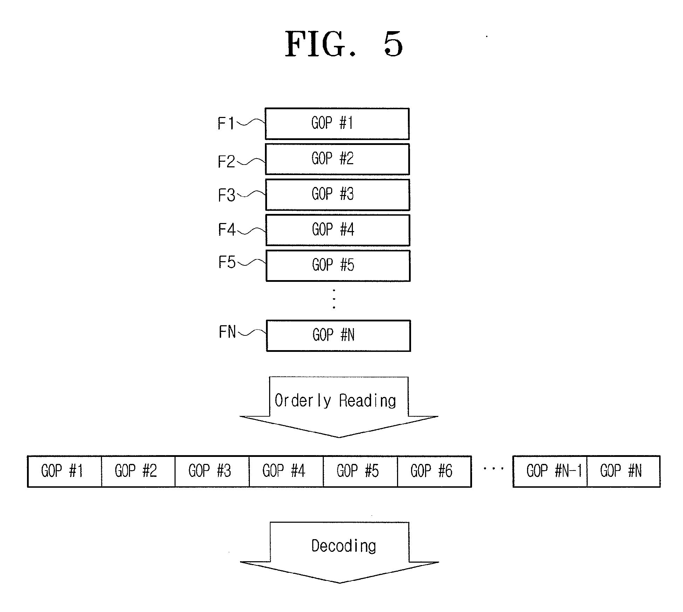

The operation in the normal playback mode of the video apparatus has been explained above, which mainly includes, as shown in Figure 5, orderly reading the files with reference to the names of the written files, and orderly decoding the GOP of the read files.

The operation in the high-speed playback mode of the video apparatus according to an exemplary embodiment of the present invention will be explained below, with referring again Figure 4.

If the video apparatus is determined to be in the high-speed playback mode at operation S450, the control unit 150 reads the I-pictures of the GOP of the respective files in order, with reference to the files names written in the storage unit 160, at operation S460.

Accordingly, I-pictures are read from the file containing the first GOP of the video stream, I-pictures of the file containing the second GOP are read, ..., and I-pictures are read from the file containing the Nth GOP.

The control unit 150 may read the I-pictures in a temporal order, with reference to the file names.

After operation S460, the decoding unit 130 decodes in order the I-pictures read by the control unit 150, at operation S470. Likewise in the normal playback mode, the decoding unit 130 may receive the files read by the control unit 150 i) through the parsing unit 120, or ii) directly from the control unit 150.

The video output unit 130 displays the I-pictures decoded and output from the decoding unit 130 for the user to view, at operation S480.

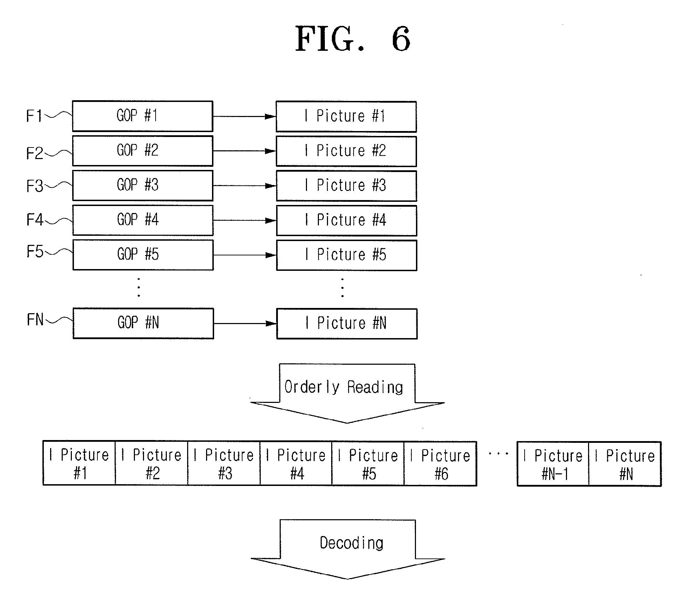

The high-speed playback operation has been explained above, which mainly includes, as shown in Figure 6, orderly reading the I-pictures with reference to the names of the written files, and orderly decoding the read I-pictures.

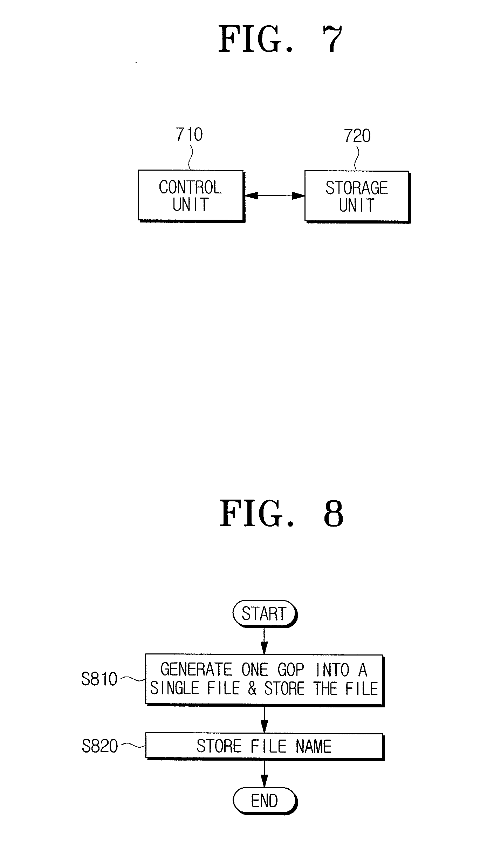

A video recording apparatus and a method thereof according to another exemplary embodiment of the present invention will be explained below, with reference to Figures 7 and 8.

Referring to Figure 7, the video recording apparatus may include a control unit 710 and a storage unit 720. The storage unit 720 may implement a recording medium which stores files. The control unit 710 generates one file for one GOP, writes the file in the storage unit 720 along with the file name.

According to a video recording method exemplified in Figure 8, first, the control unit 710 generates one file for one GOP and writes the generated file in the storage unit 720 at operation S810, and writes the file name in the storage unit 720 at operation S820.

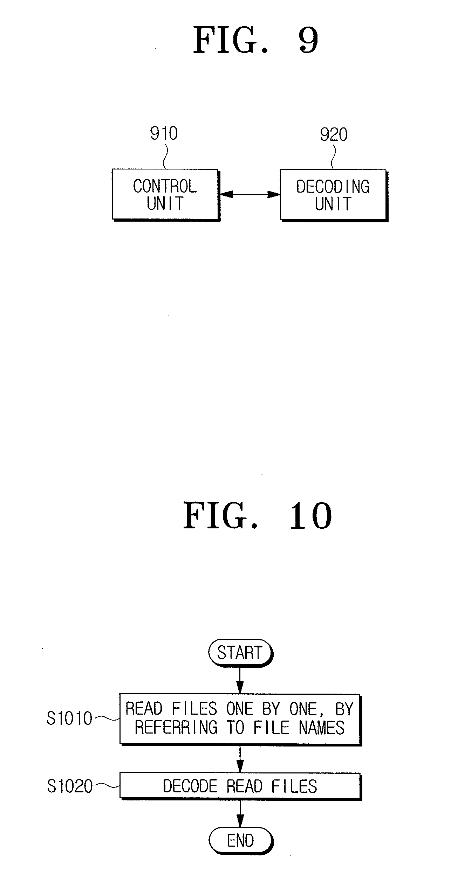

A video playback apparatus and a method thereof according to an exemplary embodiment of the present invention will be explained below, with reference to Figures 9 and 10.

Referring to Figure 9, a video playback apparatus may include a control unit 910 and a decoding unit 920. The control unit 910 reads the files containing the GOP, with reference to the names of the files. The decoding unit 920 decodes the files read by the control unit 910.

Referring to the video playback method exemplified in Figure 10, first, the control unit 910 orderly reads the files containing the GOP, with reference to the names of the files, at operation S1010, and the decoding unit 920 decodes the files read by the control unit 910, at operation S1020.

The process of parsing and writing a video stream in units of GOP, and the process of playing back a video stream which is parsed and written in units of GOP, have been explained above with reference to a few exemplary embodiments of the present invention.

In the above exemplary embodiments, the video stream received at the video receiving unit 110 of Figure 2 is exemplified as being compressed in the format of MPEG, H.264. However, this should not be construed as limiting. Any video stream may be used, regardless of compression format, as long as the video stream consists of GOP.

Additionally, although the GOP is exemplified as having I-picture, B-picture and P-picture, the technical concept of the present invention may be applied to a GOP having I-picture and P-picture.

The parsing unit 120 of Figure 2 may be implemented as a DEMUX element which parses and outputs the video stream in units of GOP, when an A/V stream is demodulated to video stream, audio stream and other data.

Furthermore, the parsing unit 120 may be removed, and the control unit 150 may carry out the function of the parsing unit 120.

In the above exemplary embodiments, the file names are written in a metadata area. However, one will appreciate that the file names can be written in any appropriate areas other than the metadata area.

In the above exemplary embodiments, one file is generated for one GOP for convenience of explanation. However, one will understand that one file may be generated for two or more GOP, after which the name of the file is written and the playback is carried out, using the written file name according to the exemplary embodiments of the present invention.

The technical concept of the present invention is applicable to any video apparatus which can record the externally-received video stream and play back the recorded video stream. For example, a TV with a video recording function, a settop box (STB), a Personal Video Recorder (PVR), a Digital Video Recorder (DVR), a Digital Video Disk Recorder (DVDR), a Personal Multimedia Player (PMP), a Hard Disk Drive (HDD) player or a mobile phone, may be implemented.

As explained above, according to the exemplary embodiments of the present invention, an incoming video stream can be parsed in units of GOP and written in a plurality of files. As a result, failure of entire playback process can be prevented when there occurs damage to one file, because the other files can still be played on.

Additionally, because the index file is not used, use of storage space can be saved, and risk of having failure of high-speed playback due to damage of index file, can be avoided.

Furthermore, because one video stream can be written in a plurality of files, partial edition of video becomes more efficient and easier.

The above description is illustrative and not restrictive. Many variations of the invention will become apparent to those of skill in the art upon review of this disclosure. The scope of the invention should, therefore, not be determined by the above descriptions, but instead should be determined by the appended claims.

## Claims

1. A method of recording a video, comprising:
generating a single file from a predetermined number of Group of Pictures (GOP), and storing the generated single file; and
storing a name of the single file.

2. The method of claim 1, wherein the predetermined number is one GOP.

3. The method of claim 1 or 2, further comprising parsing an incoming video stream in units of GOP to generate a parsed GOP, and wherein the generating generates the single file from the parsed GOP.

4. The method of claim 3, wherein the incoming video stream is in a compression format.

5. The method of claim 4, wherein the compression format comprises a Moving Picture Experts Group (MPEG) format.

6. The method of any one of the preceding claims, wherein the name of the single file comprises an element which indicates a temporal relation of a GOP contained in the single file with another GOP of the same video stream.

7. The method of any one of the preceding claims, wherein the name of the single file indicates an order of generating the single file.

8. An apparatus for recording a video, comprising:
a storage unit (160) which stores a file; and
a control unit (150) configured to generate a single file from a predetermined number of Group of Pictures (GOP) and store the generated single file in the storage unit, and store a name of the generated single file in the storage unit (160).

9. The apparatus of claim 8, wherein the predetermined number of GOP is one GOP.

10. The apparatus of claim 8 or 9, further comprising a parsing unit (120) configured to parse an incoming video stream in units of GOP to generate a parsed GOP, and wherein the control unit (150) is configured to generate the single file from the parsed GOP and store the generated single file in the storage unit (160).

11. The apparatus of claim 10, wherein the incoming video stream is in a compression format.

12. The apparatus of claim 11, wherein the compression format comprises a Moving Picture Experts Group (MPEG) format.

13. The apparatus of claim 8 or 9, wherein the control unit (150) is configured to parse an incoming video stream in units of GOP to generate a parsed GOP, generate the single file from the parsed GOP, and store the generated single file in the storage unit (160).

14. The apparatus of any one of claims 8 to 13, wherein the name of the generated single file comprises an element which indicates a temporal relation of a GOP contained in the generated single file with another GOP of the same video stream.

15. The apparatus of any one of claims 8 to 14, wherein the name of the generated single file indicates an order of generating the single file.

16. A method of playing back a video, comprising:
reading a plurality of files one by one, by referring to names of the plurality of files, each of the plurality of files containing a predetermined number of Group of Pictures (GOP); and
decoding the read plurality of files.

17. The method of claim 16, wherein the predetermined number of GOP is one GOP.

18. The method of claim 16 or 17, wherein one of the names of the plurality of files comprises an element which indicates a temporal relation of a GOP contained in one of the plurality of files with another GOP of the same video stream, and
the reading the plurality of files comprises reading the plurality of files in the temporal relation, by referring to the names of the plurality of files.

19. The method of any one of claims 16 to 18, wherein the names of the plurality of files indicate an order of generating the plurality of files, and the reading the plurality of files reads the plurality of files in the order of generating, by referring to the names of the plurality of files.

20. The method of any one of claims 16 to 19, wherein the reading the plurality of files reads I-pictures, one by one, by referring to the names of the plurality of files, and the decoding the read plurality of files decodes the read I-pictures.

21. An apparatus for playing back a video, comprising:
a control unit (150) configured to read files, one by one, by referring to names of the files, each of the files containing a predetermined number of Group of Pictures (GOP); and
a decoding unit (130) configured to decode the files read by the control unit (150).

22. The apparatus of claim 21, wherein the predetermined number of GOP comprises one GOP.

23. The apparatus of claim 21 or 22, wherein each of the names of the files comprises an element which indicates a temporal relation of a GOP contained in one file with another GOP of the same video stream, and the control unit (150) reads the files in the temporal relation, by referring to the names of the files.

24. The apparatus of any one of claims 21 to 23, wherein the names of the files indicate an order of generating the files, and the control unit reads the files in the order of generating, by referring to the names of the files.

25. The apparatus of any one of claims 21 to 24, wherein the control unit (150) is configured to read I-pictures, among pictures constituting the GOP, one by one, by referring to the names of the files, and the decoding unit (130) is configured to decode the read I-pictures.
